# EUROPEAN PATENT APPLICATION

(11) **EP 4 621 894 A1**
(43) Date of publication of application: **24.09.2025**
(21) Application number: 24164722.1
(22) Date of filing: 20.03.2024
(51) Int. Cl.: H01M 10/04, H01M 50/209, H01M 50/244, H01M 50/264

(54) **ENERGY STORAGE ARRAY FOR ENERGY STORAGE DEVICES**

(71) Applicant: MacroCaps ApS, 2791 Dragør (DK)
(72) Inventor: Ratje, Morten, 2300 Copenhagen (SE)
(74) Representative: Seyer & Nobbe Patentanwälte PartmbB

(57) **Abstract**

An energy storage array for energy storage devices, comprising a first and a second pole plate spaced apart from each other, a plurality of base plates slidably arranged between the pole plates and configured to each receive an energy storage device, and a fixing device configured to fix the base plates.

## Description

The present invention relates to an energy storage array for energy storage devices.

Energy storage arrays are known, for example, in the form of battery or capacitor modules. Such modules comprise a plurality of interconnected energy storage devices, such as battery cells or capacitors, in a single array or module. They are used to store energy and can be used in a variety of applications.

A disadvantage of the known energy storage arrays is that the individual energy storage devices are usually connected to each other by cables. The use of cables to connect the individual energy storage devices of an array can promote electrical losses and lead to reduced performance, especially in applications that require fast energy delivery. The cables can introduce additional parasitic resistance, which can lead to a higher overall resistance of the energy storage array and thus reduce energy transfer efficiency. Cable connections are generally more susceptible to mechanical stress, vibration or shock. This could affect the reliability of the module, especially in environments with high mechanical stress. Cable connections can hinder heat dissipation, which can lead to a higher operating temperature.

The known energy storage arrays can only be put into operation at great expense and the maintenance or replacement of the individual energy storage devices is complex.

The task of the invention is to overcome the disadvantages known from the prior art. The task of the invention can therefore be seen, among other things, as providing an energy storage array in which the individual energy storage devices are not connected to one another by means of cables, which can be put into operation quickly and easily and/or which enables the individual energy storage devices to be replaced easily.

To solve the problem, an energy storage array for energy storage devices is provided, comprising a first and a second pole plate spaced apart from each other, a plurality of base plates which are slidably arranged between the pole plates and configured to each receive an energy storage device, and a fixing device which is configured to fix the base plates.

The energy storage array therefore comprises two pole plates. The two pole plates are preferably of the same shape. A pole plate can be understood as a preferably rectangular plate. The pole plates form the outer electrically conductive surfaces of the energy storage array. On the one hand, the pole plates form a connection to the internal energy storage devices and, on the other hand, they provide the external connections of the energy storage array. Thus, according to the invention, a pole plate can also be understood as a connection plate or terminal plate.

Preferably, the first and second pole plate form two opposite ends of the energy storage array. Each pole plate preferably has an inner and an outer side, with the inner sides facing towards each other and the outer sides facing away from each other.

The energy storage array preferably has the shape of a cuboid, in which the pole plates form two opposing side surfaces. Preferably, the pole plates form the entire surfaces of the two opposing side surfaces of the cuboid. These side surfaces, which comprise the pole plates or are formed by the pole plates, preferably have the smallest surfaces of the six cuboid surfaces. Preferably, more than half of the surface area of the outer sides of the pole plates is available as an electrically conductive surface.

The base plates are holding devices for energy storage devices. Each base plate is designed to accommodate an energy storage device. The energy storage array comprises two or more base plates. The energy storage array can therefore have 2, 3, 4, 5, 6, 7, 8, 9, 10 or more base plates. The mounting surface of a base plate preferably forms a horizontally arranged plane. Preferably, the upper side of a base plate is designed to accommodate an energy storage device. In this case, the base plate is preferably arranged in the area of the energy storage array close to the ground. According to the invention, however, it is also provided that the underside of a base plate is designed to accommodate an energy storage device. In this case, the base plate is preferably arranged in the area of the energy storage array close to the ceiling.

The base plates are arranged so that they can be moved between the pole plates. The base plates can therefore be moved in the direction of the first pole plate as well as in the direction of the second pole plate. Preferably, a base plate can be pushed up to the first pole plate, whereby either contact is made between the base plate and the first pole plate or the base plate is positioned in close proximity to the first pole plate. The other base plates can follow the first base plate so that the base plates are arranged next to each other. In this way, the base plates are arranged in a row, starting from the first pole plate. The base plates are in contact with each other or are arranged close to each other.

The energy storage array comprises a fixing device that is configured to fix the base plates. Preferably, the fixing device is designed to push the base plates together and fix them in the pushed-together state. This fixing device is thus preferably designed such that it holds the base plates securely in a pushed-together position and prevents them from moving. According to the invention, the pushed-together state can thus be understood to mean that the base plates are arranged closely adjacent to one another or are in direct contact with one another. One base plate is preferably positioned in the immediate vicinity of the first pole plate, while the other base plates are arranged in a row adjacent to the base plate next to the pole plate.

The fixing device is also designed to release the base plates again so that the base plates can be moved again.

The fixing device is preferably arranged between the first and second pole plate.

In an advantageous embodiment, the fixing device comprises a pole connection plate. The pole connection plate can be arranged in such a way that the base plates are located between the pole connection plate and the first pole plate.

A pole connection plate can be understood to be a rectangular plate. The pole connection plate is designed to make contact with an energy storage device, which can be arranged between the first pole plate and the pole connection plate. Preferably, the pole connection plate is designed to make contact with an energy storage device that is located on the base plate that is arranged closest to the pole connection plate. The pole connection plate is preferably arranged to be displaceable between the first and the second pole plate. Preferably, the pole connection plate can be displaced in the direction of the first and/or second pole plate. There is preferably an electrical connection between the pole connection plate and the second pole plate, so that the second pole plate can be in electrical contact with the energy storage devices via the pole connection plate. Preferably, more than half of the surface of the side of the pole connection plate facing the first pole plate is available as an electrically conductive surface. Preferably, the pole connection plate is arranged parallel to the pole plates.

The pole connection plate is preferably designed to push all the base plates together. The pole connection plate is preferably designed to make contact with the base plate that is furthest away from the first pole plate and to push it towards the first pole plate, thereby pushing all the base plates together. Preferably, the side of the pole connection plate facing the first pole plate has a base plate contact portion for making contact with the base plate located farthest from the first pole plate and an electrical contact portion provided for making electrical contact with an energy storage device located on said base plate. Preferably, the base plate contact area has an area in the range of 1-25%, preferably in the range of 5-15%, of the total area of the side of the pole connection plate facing the first pole plate, and the electrical contact area has an area in the range of 75-99%, preferably in the range of 85-95%, of the total area of the side of the pole connection plate facing the first pole plate.

In an advantageous embodiment of the invention, the fixing device comprises a gear. The gear is preferably a self-locking gear. A self-locking gear has the advantage that it prevents the possibility of unintentional reverse movement. In the fixing device according to the invention, this is important in order to ensure stable and secure positioning of the base plates and thus of the energy storage devices. The self-locking gear allows the pole connection plate to remain in the desired position without being influenced by forces acting on the one or more output shafts.

The gear is preferably a worm gear. Gears with a worm gear ratio can achieve a high transmission ratio. In this way, a high power transmission can be achieved at a low speed. However, a bevel gear can also be used according to the invention.

The gear is preferably arranged between the pole connection plate and the second pole plate. The gear is preferably designed to move the pole connection plate in the direction of the first pole plate and back again in the direction of the second pole plate.

The gear preferably comprises a drive shaft and one or more output shafts. Preferably, the drive shaft is designed as a worm and the one or more output shafts each comprise a worm wheel as a counter wheel to the worm.

The drive shaft of the gear preferably extends parallel to the pole plates. This means that the axis of rotation of the drive shaft preferably runs parallel to the planes spanned by the pole plates. The one or more output shafts of the gear preferably run perpendicular to the planes spanned by the pole plates.

The one or more output shafts can each be connected to the pole connection plate by means of a bearing, preferably in the form of a thrust bearing. The bearings can be used to decouple the rotary movement of the one or more output shafts. The rotary movement of the one or more output shafts can cause them to move together with the pole connection plate in the direction of the first pole plate.

The gear, preferably each output shaft, preferably has a pressure regulating device. The pressure regulating device is preferably designed to adjust the position of the one or more output shafts in relation to the drive shaft. In this way, the position of the pole connection plate and thus the pressure acting on the base plates or the energy storage devices can be adjusted for a given position of the drive shaft.

The base plates are preferably individually slidably mounted. The base plates can have first sliding elements. Each base plate can therefore have one or more first sliding elements. These first sliding elements can facilitate the movement of the base plates between the pole plates. The first sliding elements of the base plates are preferably arranged on the side of the base plate that is not intended to receive the energy storage devices. Preferably, the first sliding elements are arranged on the underside of the base plates. Preferably, the first sliding elements comprise linear ball bearings and/or sliding bushings and/or sliding carriages. The first sliding elements are preferably designed to engage in or embrace one or more linear guides.

In an advantageous embodiment, the energy storage array comprises one or more linear guides. These one or more linear guides preferably extend perpendicular to the pole plates and/or to the pole connection plate. The one or more linear guides can extend from the first pole plate in the direction of the second pole plate. Preferably, the one or more linear guides extend at least as far as the fixing device, preferably as far as the pole connection plate of the fixing device.

According to the invention, linear guides can be understood as mechanical components that enable precise and low-friction linear movement of the base plates. Preferably, the linear guides are designed as slide rails or slide tubes, wherein the first sliding elements of the base plates are movable on the slide rails or slide tubes. The first sliding elements, such as linear ball bearings and/or sliding bushings, can thus serve to enable low-friction linear movement in relation to the fixed linear guides. Preferably, the energy storage array comprises two linear guides.

In an advantageous embodiment, the base plates are resiliently mounted in such a way that the base plate adjacent to the pole plate separates from the pole plate without the application of force by the fixing device. In an advantageous embodiment, the base plates are resiliently mounted in such a way that the base plates separate from each other without the application of force by the fixing device. In an advantageous embodiment, the base plates are resiliently mounted in such a way that the base plate adjacent to the fixing device separates from the fixing device without the application of force by the fixing device. This means that the base plates, which have been pushed together by the fixing device, automatically separate or move away from each other, from the first pole plate and/or from the fixing device after being released by the fixing device, for example by moving the pole connection plate in the direction of the second pole plate. This makes it possible to quickly disconnect the electrical contact between the pole plates and the energy storage devices and between the energy storage devices themselves. Preferably, spring elements are arranged between the first pole plate and the adjacent base plate and/or between the base plates and/or between the fixing device, in particular the pole connection plate, and the adjacent base plate. The spring elements are preferably in the form of disk springs. Disc springs have the advantage that they are space-saving and can provide a high spring force in a small space.

Preferably, the base plates each comprise one or more guide elements for guiding the energy storage devices. On the one hand, the guide elements ensure that the energy storage devices can be pushed precisely onto the base plates. Preferably, the base plates have a stop for the energy storage devices. While the guide elements can control the movement of the energy storage devices parallel to the plane of the pole plates, the stop can prevent the energy storage device from moving beyond the end of the base plate. The energy storage devices preferably have counter elements corresponding to the guide elements. In an advantageous embodiment, the guide elements are designed as springs and the corresponding counter elements of the energy storage device are designed as grooves or vice versa.

The guide elements are preferably designed so that the energy storage devices can only be attached to the base plates in a specific orientation. The energy storage devices are preferably designed so that they can only be attached to the base plates in the specified orientation. This ensures that incorrect mounting and the resulting short circuits are avoided. Preferably, the guide elements are designed asymmetrically for this purpose, preferably in the direction of view along the guide element. The asymmetrical design creates a mechanical safety feature, which ensures that the energy storage devices can only be mounted in the intended correct position.

The energy storage array can have further guide elements instead of or in addition to the guide elements attached to the base plates. These guide elements can fulfill the same function as the previously described guide elements of the base plates and are preferably asymmetrical. Preferably, these further guide elements are designed to interact with the side of the energy storage device that is opposite the side facing the base plate. Preferably, the additional guide elements are attached to the ceiling of the energy storage array and extend in the direction of the base plates. Preferably, one or more guide elements are provided for each slot for an energy storage device.

The guide elements of the base plates and/or the other guide elements for guiding the energy storage devices therefore ensure that the energy storage devices can only be inserted into the energy storage array in the same orientation. This can prevent short circuits, as all energy storage devices can only be inserted with the same orientation of the poles. According to the invention, however, it is provided that the guide elements of the base plates and/or the further guide elements can be adapted in such a way that the energy storage devices can be inserted in a different orientation, preferably an orientation rotated by 180°. In this way, the pole direction of the energy storage array can be easily changed. Preferably, the guide elements or a part of each guide element can be repositioned, screwed, swiveled and/or repositioned in another way in order to adjust the orientation of the energy storage devices to be inserted and thus the pole direction.

The base plates preferably each comprise a locking device for locking and unlocking the energy storage devices. The locking device is preferably designed to lock an energy storage device that has been fully attached to the base plate or pushed onto the base plate. According to the invention, "locking" is understood here to mean that the removal of the energy storage device positioned on the base plate is inhibited by the locking device. Preferably, the locking device is activated automatically as soon as the energy storage device is fully positioned on the base plate. The locking device can have a preferably spring-mounted locking lever that automatically engages in the energy storage device as soon as it has been fully positioned on the base plate. The energy storage device preferably has a corresponding latching device which is designed to hold the locking device securely in position. The locking device is also designed to release or unlock the locked energy storage device. Unlocking is preferably carried out by actuating, e.g. moving or pivoting, the locking lever against the spring force.

The base plate can be designed so that the energy storage device is automatically moved at least partially off the base plate when unlocked. For this purpose, the energy storage array, preferably the base plates, can have springs that are compressed when the energy storage devices are placed or pushed in. When the base plates are unlocked, the springs push the energy storage devices at least partially off the base plate.

In an advantageous embodiment, the base plates each comprise second sliding elements, preferably in the form of sliding rollers. These second sliding elements are preferably designed to reduce the friction between the base plate and the energy storage device. The second sliding elements are preferably arranged on the side of the base plate that is intended to come into contact with the energy storage devices. Preferably, each base plate has one or more sliding elements.

Preferably, the energy storage array comprises one energy storage device per base plate. By pushing the base plates and thus the energy storage devices together, they are electrically connected to each other and to the pole plates. Preferably, there is direct contact between two directly adjacent energy storage devices. It is therefore not necessary to wire the energy storage devices to each other or to the pole plates. The side surfaces of each energy storage device, which are arranged parallel to the planes of the pole plates, each have a contact surface for contacting the neighboring energy storage device or the pole plates or the fixing device. This contact surface preferably takes up at least 50 %, preferably at least 75 %, particularly preferably at least 85 % of the side surface. The large-surface connection ensures low internal resistance and good heat dissipation.

The energy storage devices are preferably selected from the group consisting of capacitors, batteries and accumulators. Supercapacitors, preferably in the form of electrical double-layer capacitors, are particularly preferred as energy storage devices.

The task of the invention is also to provide a method for commissioning an energy storage array which overcomes the disadvantages known from the prior art. The task of the invention can thus be seen, among other things, in providing a method for commissioning an energy storage array which can be carried out simply and quickly,

To solve the problem, a method for commissioning an energy storage array is provided, comprising the steps of
a) arranging an energy storage device on a base plate, preferably by sliding the energy storage devices onto the base plates,
b) optionally locking the energy storage devices on the base plates,
c) pushing the base plates with the energy storage devices together, preferably by actuating a gear
d) optionally connecting the pole plates, e.g. with external devices.

Preferably, the steps are carried out in the specified order. Preferably, the method consists of the specified steps.

The description of the energy storage array according to the invention and the method according to the invention for commissioning an energy storage array are to be understood as complementary to each other, so that method details that are explained in connection with the energy storage array are also to be understood individually or in combination as method details. Features of the energy storage array that are explained in connection with the method according to the invention are also to be understood individually or in combination with each other as features of the energy storage array.

The invention is explained again below by way of example with reference to the figures.

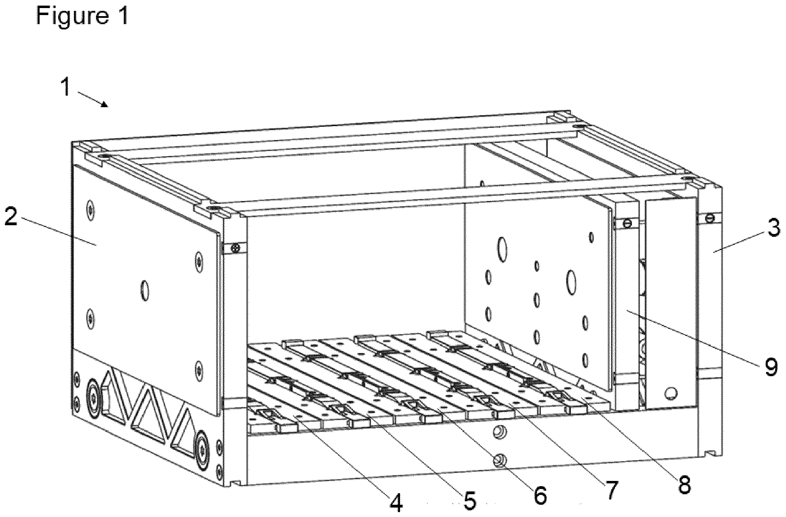

Fig. 1 shows an exemplary embodiment of an energy storage array according to the invention. The energy storage array 1 comprises a cuboid housing in which the first pole plate 2 and the second pole plate 3 form two opposing side walls. The outer sides of the pole plates 2 and 3 represent the terminals of the energy storage array. A fixing device 9 is arranged on the inside of the second pole plate 3. Base plates 4, 5, 6, 7, 8 are arranged between the fixing device 9 and the first pole plate 2. The base plates 4, 5, 6, 7, 8 can be pressed together by means of the fixing device 9 and pushed in the direction of the first pole plate 2. The base plates are arranged with their underside sliding on linear guides, which extend from the first pole plate 2 in the direction of the fixing device 9. Energy storage devices can be inserted into the energy storage array through the front opening of the housing shown in the view, whereby each base plate 4, 5, 6, 7, 8 is designed to accommodate an energy storage device. The inner sides of the pole plate 2 and the fixing device 9 can make electrical contact with the inserted energy storage devices. There is an electrical connection from the inside of the fixing device 9 to the outside of the pole plate 3.

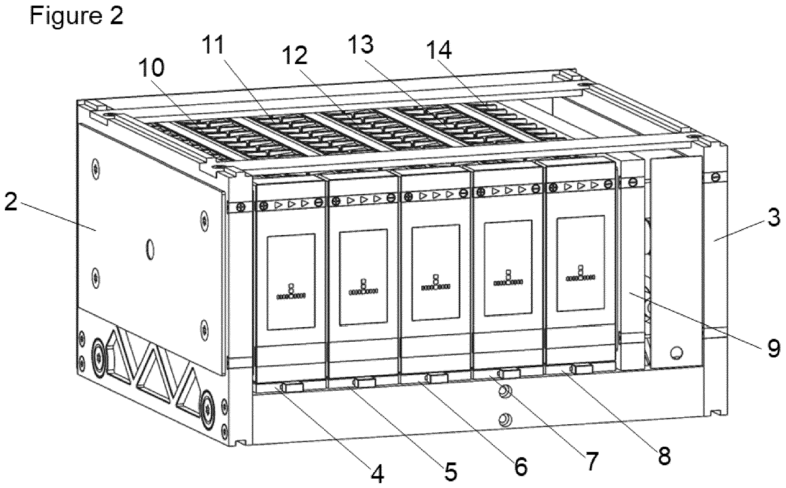

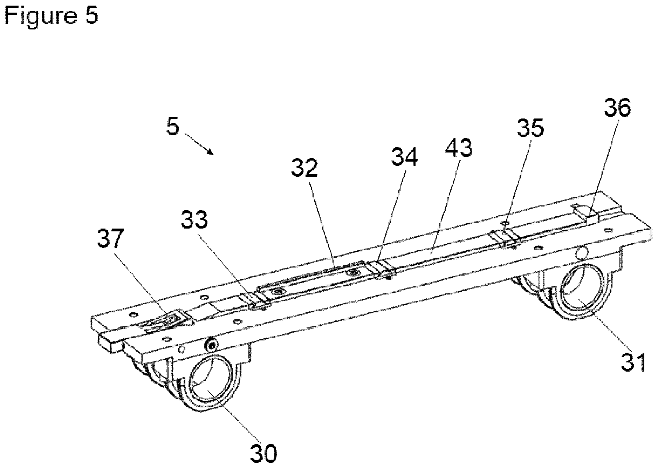

Fig. 2 shows the energy storage array from Fig. 1 with inserted energy storage devices 10, 11, 12, 13, 14. The first pole plate 2 represents the anode, the second pole plate 3 represents the cathode. The base plates 4, 5, 6, 7, 8 including the energy storage devices 10, 11, 12, 13, 14 are pushed together by the fixing device so that there is an electrical connection from the first pole plate 2 to the second pole plate 3 by means of the energy storage devices 10, 11, 12, 13, 14 and the fixing device 9. The direction of current can be reversed by turning the energy storage devices so that the underside is on top. To do this, however, the positioning of the asymmetrical guide elements (see Fig. 5) must be adjusted.

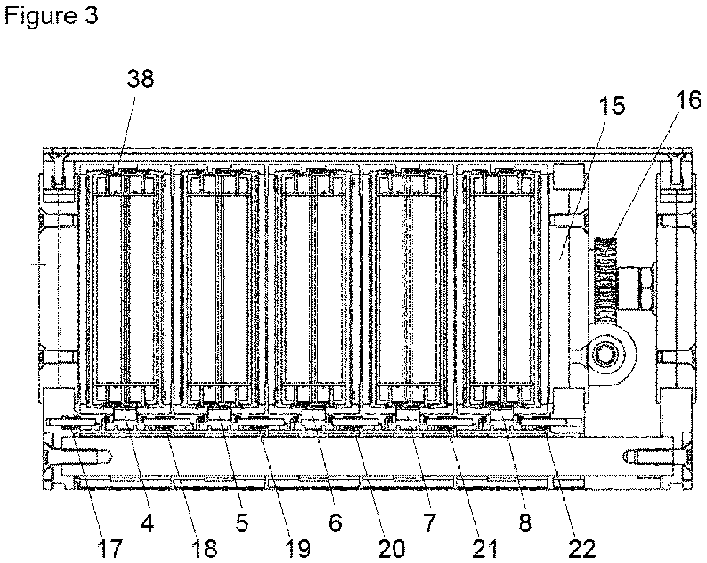

Fig. 3 shows a cross-section along a plane orthogonal to the pole plates through an energy storage array according to the invention with inserted energy storage devices. The energy storage devices are positioned on the base plates 4, 5, 6, 7, 8. These are pushed together by the fixing device comprising a pole connection plate 15 and a gear 16. Spring elements 18, 19, 20, 21 are arranged between the individual base plates. These ensure that the individual base plates separate from each other as soon as the pole connection plate 15 moves in the direction of the second pole plate, i.e. to the right. In addition, spring elements are arranged between the first pole plate and the base plate 4 as well as between the pole connection plate 15 and the base plate 8, which ensure that these base plates 4, 8 move away from the first pole plate or from the pole connection plate 15 as soon as the pole connection plate 15 moves in the direction of the second pole plate, i.e. to the right. Asymmetrical guide elements 38 ensure that the energy storage devices can only be inserted into the energy storage array in one orientation.

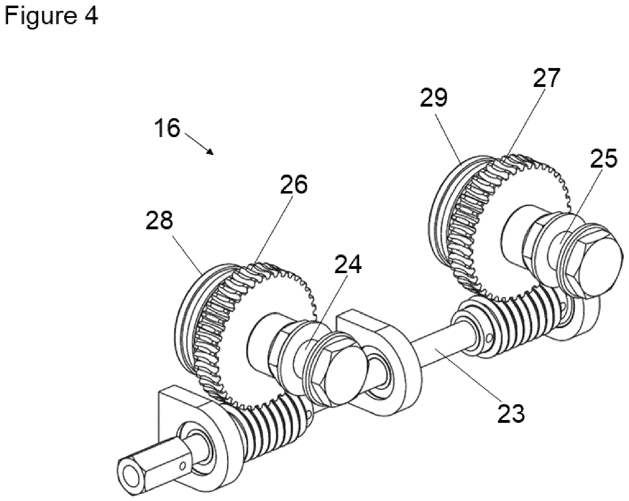

Fig. 4 shows an exemplary embodiment of a gear 16 of a fixing device. The gear 16 comprises a drive shaft 23 and two output shafts 24, 25. The drive shaft 23 has two worms that engage in the worm wheels 26, 27. This design means that the gear is self-locking, so that rotational forces acting on the output shafts 24, 25 do not cause the drive shaft 23 to rotate. A thrust bearing 28, 29 is arranged at the end of each of the output shafts 24, 25 and is intended to be connected to the pole connection plate (not shown). When the drive shaft 23 is rotated in one direction, the output shafts 24, 25 move in one direction orthogonal to the axis of rotation of the drive shaft 23. When the drive shaft 23 is rotated in the other direction, the output shafts 24, 25 move in the other direction orthogonal to the axis of rotation of the drive shaft 23. For example, a clockwise rotation of the drive shaft 23 causes the output shafts 24, 25 and thus the thrust bearings 28, 29 to move away from the drive shaft 23, while an anticlockwise rotation of the drive shaft 23 causes the output shafts 24, 25 and thus the thrust bearings 28, 29 to move towards the drive shaft 23.
Fig. 5 shows an exemplary embodiment of a base plate 5. First sliding elements 30, 31 in the form of sliding bushings are attached to the underside, which are intended to engage around linear guides and be displaced along these linear guides. The upper side of the base plate 5 is intended to accommodate an energy storage device. The energy storage device can be pushed onto the base plate 5 from the left-hand side until it comes up against the stop 36. A guide element 43 in the form of a guide rail is attached to the upper side for this purpose. The guide element 43 has an elevation 32 on one side and is therefore asymmetrical. The base plate 5 also has a locking device 37 in the form of a locking lever. The locking lever is resiliently mounted so that it is pressed downwards when the energy storage devices are placed on the base plate 5 and automatically moves upwards again once the energy storage device has been fully inserted onto the base plate 5 and locks into place on the energy storage devices. This prevents the energy storage device from being removed from the base plate 5 without actuating the locking device. The upper side of the base plate 5 also has second sliding elements 33, 34, 35 in the form of sliding rollers.

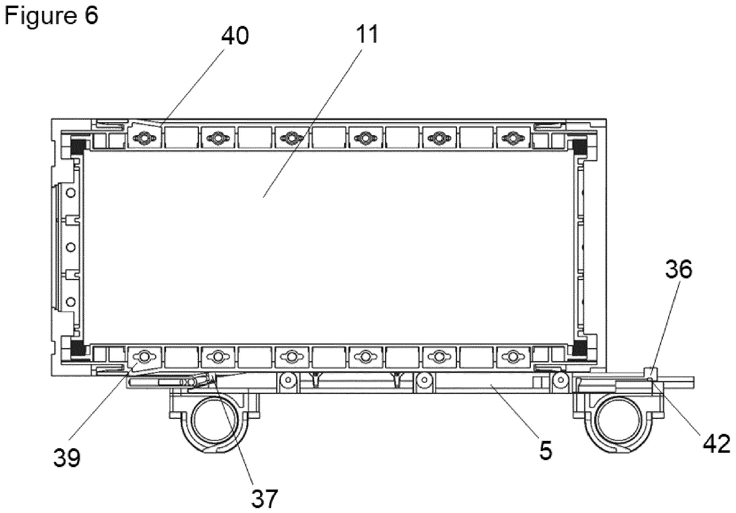

Fig. 6 shows a cross-section along a plane parallel to the pole plates through a base plate 5 with partially inserted energy storage device 11. The locking device 37 in the form of the locking lever is initially pressed downwards by the latching device 39 of the energy storage device 11 as the energy storage device 11 is pushed further onto the base plate 5. When the energy storage device 11 is pushed further onto the base plate 5 in the direction of the stop 36, the locking lever will move in the direction of the energy storage device 11 after passing the latching device 39, which blocks the energy storage device 11 from being pulled out of the base plate 5.

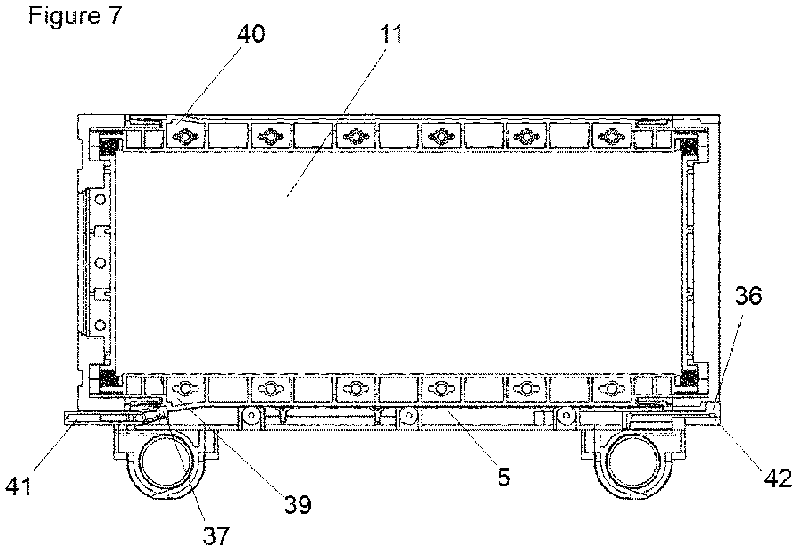

Fig. 7 shows the energy storage device 11 pushed completely onto the base plate 5. A spring 42 is attached near the stop 36, which moves the energy storage device 11 at least partially off the base plate 5 when the locking device 37 is unlocked by actuating the unlocking switch 41. The energy storage device 11 has a further latching device 40 on the upper side, which is intended to interact with a further locking device attached to the area of the energy storage array close to the ceiling.

## Claims

1. An energy storage array for energy storage devices, comprising
a first and a second pole plate spaced apart from each other,
a plurality of base plates slidably arranged between the pole plates and configured to each receive an energy storage device, and
a fixing device configured to fix the base plates.

2. The energy storage array according to claim 1, wherein the first and second pole plate form two opposite ends of the energy storage array.

3. The energy storage array according to claim 1 or 2, wherein the fixing device comprises a pole connection plate arranged such that the base plates are located between the pole connection plate and the first pole plate.

4. Energy storage array according to any one of claims 1 to 3, wherein the fixing device is designed to push the base plates together and to fix them in the pushed-together state and to release the base plates again.

5. The energy storage array according to any one of claims 1 to 4, wherein the fixing device comprises a gear, preferably a self-locking gear, preferably wherein the gear is arranged between the pole connection plate and the second pole plate.

6. Energy storage array according to one of claims 1 to 5, wherein the drive shaft of the gear extends parallel to the pole plates and/or wherein the one or more output shafts are each connected to the pole connection plate by means of a bearing, preferably in the form of a thrust bearing.

7. Energy storage array according to any one of claims 1 to 6, wherein the base plates are individually slidably mounted, preferably wherein the base plates have first sliding elements which are preferably designed to engage in or embrace one or more linear guides.

8. An energy storage array according to any one of claims 1 to 7, comprising one or more linear guides preferably extending perpendicular to the pole plates and/or to the pole connection plate, preferably wherein the linear guides extend from the first pole plate in the direction of the pole connection plate.

9. Energy storage array according to any one of claims 1 to 8, wherein the base plates are resiliently mounted in such a way that, without the application of force by the fixing device, the base plate adjacent to the pole plate separates from the pole plate and/or the base plates separate from each other and/or the base plate adjacent to the fixing device separates from the fixing device.

10. Energy storage array according to any one of claims 1 to 9, wherein spring elements are arranged between the first pole plate and the adjacent base plate and/or between the base plates and/or between the fixing device, in particular the pole connection plate, and the adjacent base plate.

11. Energy storage array according to any one of claims 1 to 10, wherein the base plates each comprise one or more guide elements for guiding the energy storage devices.

12. Energy storage array according to any one of claims 1 to 11, wherein the guide elements are asymmetrical.

13. Energy storage array according to any one of claims 1 to 12, wherein the base plates each comprise a locking device for locking and unlocking the energy storage devices.

14. Energy storage array according to any one of claims 1 to 13, wherein the base plates each comprise second sliding elements, preferably sliding rollers, which are preferably designed to reduce the friction between the base plate and the energy storage device.

15. A method of commissioning an energy storage array, preferably according to any one of claims 1 to 14, comprising the steps of
a) arranging an energy storage device on a base plate, preferably by sliding the energy storage devices onto the base plates,
b) optionally locking the energy storage devices on the base plates,
c) pushing the base plates with the energy storage devices together, preferably by actuating a gear
d) optionally connecting the pole plates.
